(19) Europäisches Patentamt / European Patent Office / Office européen des brevets

(11) **EP 2 872 564 B1**

(12) **FASCICULE DE BREVET EUROPEEN**

(45) Date de publication et mention de la délivrance du brevet:
**13.07.2016 Bulletin 2016/28**

(21) Numéro de dépôt: **13744744.7**

(22) Date de dépôt: **15.07.2013**

(51) Int Cl.:
*C08L 23/10* (2006.01)    *C08L 23/14* (2006.01)
*C08L 3/00* (2006.01)    *C08L 51/06* (2006.01)

(86) Numéro de dépôt international:
**PCT/FR2013/051695**

(87) Numéro de publication internationale:
**WO 2014/009676 (16.01.2014 Gazette 2014/03)**

(54) **COMPOSITION THERMOPLASTIQUE À BASE D'AMIDON COMPRENANT UN COPOLYMÈRE DE PROPYLÈNE FONCTIONNALISÉ**

THERMOPLASTISCHE STÄRKE ZUSAMMENSETZUNG DIE FUNKTIONALISIERTES POLYPROPYLENE ENTHÄLT

THERMOPLASTIC STARCH COMPOSITION CONTAINING FUNCTIONALISED PROPYLENE COPOLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256814**

(43) Date de publication de la demande:
**20.05.2015 Bulletin 2015/21**

(73) Titulaire: **Roquette Frères**
**62136 Lestrem (FR)**

(72) Inventeurs:
• **MOREL, Floriane**
**F-59700 Marc en Baroeul (FR)**
• **SAINT-LOUP, René**
**F-59160 Lomme (FR)**
• **BARTHOMEUF, Kévin**
**F-69008 Lyon (FR)**
• **GIMENEZ, Jérôme**
**F-69500 Bron (FR)**
• **SAUTEL, Henri**
**F-38540 Saint Just Chaleyssin (FR)**
• **MARCILLE, Sophie**
**F-59800 Lille (FR)**

(74) Mandataire: **Cabinet Plasseraud**
**66, rue de la Chaussée d'Antin**
**75440 Paris Cedex 09 (FR)**

(56) Documents cités:
**WO-A1-2009/022195**    **WO-A1-2011/117549**
**US-A1- 2008 249 212**    **US-A1- 2011 305 886**

EP 2 872 564 B1

**Description**

**Domaine de l'invention**

L'invention a pour objet une composition à base de polyoléfine et d'amidon thermoplastique aux propriétés améliorées. Cette composition peut être avantageusement utilisée pour la fabrication de tout type d'articles, notamment de films.

**Etat de la technique**

Le développement de plastiques issus de ressources biologiques renouvelables à court terme est devenu un impératif économique, face à l'épuisement et à la montée des prix des ressources fossiles telles que le pétrole.
De plus, ces plastiques sont souvent incinérés en fin de vie, ce qui implique un dégagement de dioxyde de carbone qui était auparavant stocké sous forme de carbone fossile. Il a été montré par la communauté scientifique que le dioxyde de carbone émis contribue fortement au réchauffement climatique observé lors de ces dernières décennies.

Dans le domaine des emballages, ces phénomènes sont particulièrement importants car ce domaine utilise des quantités importantes de matière plastique, et les emballages sont rarement recyclés en fin de vie et sont généralement incinérés.

La plupart de ces emballages sont actuellement réalisés à partir de polyoléfines, comme le polyéthylène ou le polypropylène.
Certaines de ces polyoléfines ont des propriétés rhéologiques qui leur permettent d'être transformées, à température relativement basse pour des polymères thermoplastiques, sous forme de films monocouches ou multicouches.
Les films ainsi obtenus ont des propriétés très intéressantes de perméabilité et de résistance mécanique, et ceci en particulier pour la fabrication de film et de sac d'emballage.

Cependant, un inconvénient de ces polyoléfines est qu'elles sont actuellement obtenues très majoritairement par polymérisation d'oléfines d'origine pétrochimique.

Il est donc nécessaire de développer des plastiques pouvant être développés à partir de ressources renouvelables, dits « biosourcés », afin de diminuer les quantités de plastiques obtenus à partir de pétrole.

Ainsi, il a été proposé ces dernières années de développer des polyesters qui ont une température de mise en forme proche de celle des polyoléfines, tels que le poly butylène succinate, et dont les propriétés mécaniques des films sont également similaires. Toutefois, ces polymères sont biodégradables, ce qui rend leur emploi dans certaines applications impossible, en particulier les applications où la durée de vie du produit doit être importante. De plus, le prix de ces polymères est à ce jour nettement plus important que celui des polyoléfines.

Une des solutions envisagées est de fabriquer des compositions à base d'amidon thermoplastique, celui-ci étant constitué d'amidon et de plastifiant de cet amidon tel que le glycérol. En effet, la fabrication de ces compositions est avantageuse car l'amidon est un des polymères biosourcés qui est naturellement le plus répandu dans l'environnement. Toutefois, ces amidons thermoplastiques présentent des propriétés insuffisantes, notamment en termes de tenue à l'eau.

Pour contrecarrer ces inconvénients, des compositions à base de polyoléfine et d'amidon plastifié ont été développées. Dans ces compositions, la phase d'amidon thermoplastique est dispersée dans la phase polyoléfine. Ces compositions présentent de nombreux avantages comme par exemple d'être au moins partiellement biosourcées et d'avoir une tenue à l'eau très améliorée par rapport à l'amidon thermoplastique.
Toutefois, dans ces compositions, les polyoléfines présentent naturellement une mauvaise compatibilité avec l'amidon thermoplastique. Ces compositions comprennent donc très généralement en outre une polyoléfine fonctionnelle permettant d'améliorer la compatibilité entre les deux phases.

En particulier, des compositions pouvant servir à la fabrication de films ont été décrites dans le document EP 554939, qui a pour objet une composition présentant des modules dynamiques G' et dissipatifs G" particuliers, comprenant du polyéthylène, de l'amidon thermoplastique et une polyoléfine fonctionnelle choisie parmi un polyéthylène greffé par de l'anhydride maléique et un copolymère de l'éthylène comprenant de l'éthylène et de l'anhydride maléique.

Le brevet US 5314934 a pour objet une composition, utile à la fabrication de films, cette composition étant à base d'amidon thermoplastique, de polyoléfine qui est préférentiellement du polyéthylène haute densité, et comprenant en outre une polyoléfine fonctionnelle qui est un terpolymère éthylène-acrylate-anhydride maléique.

Le document WO 2010012041 décrit quant à lui des compositions qui peuvent être utilisées pour fabriquer des films, comprenant du polyéthylène très basse densité, de l'amidon thermoplastique et une polyoléfine fonctionnelle qui est un copolymère éthylène acide acrylique.

Dans le document de Bikiaris et al.,LDPE/Starch blends compatibilized with PE-gMA copolymers, Journal of Applied Polymer Science, 1998, Vol.70, Pages 1503-1521 ont également été décrites différentes compositions comprenant du polyéthylène basse densité, du polyéthylène greffé par de l'anhydride maléique et de l'amidon thermoplastique.

Le document WO 2009022195 A1 décrit une composition comprenant une polyoléfine, de l'amidon thermoplastique et une polyoléfine fonctionnelle. La polyoléfine fonctionnelle peut être un polyéthylène greffé par de l'anhydride maléique, un polypropylène greffé par de l'anhydride maléique ou un polybutène greffé par de l'anhydride maléique.

Le document US 2011/0305886 A1 décrit une composition thermoplastique qui peut être utilisée comme couche de surface dans des laminés ou de revêtements de sol, en substitution du polychlorure de vinyle. Cette composition comprend principalement un copolymère éthylène-propylène non greffé, une bio-résine qui peut être de l'amidon thermoplastique et de faibles quantités d'un compatibilisant particulier constitué d'une polyoléfine fonctionnalisée d'isotacticité et d'indice de fluidité définis. Cette composition n'est pas utilisée pour la fabrication de film et la Demanderesse a pu constater qu'elle n'était pas utilisable en extrusion soufflage de gaine.

Malgré ces propriétés améliorées par rapport aux compositions ne comprenant pas de polyoléfine fonctionnelle, ces compositions présentent au moins un des inconvénients suivants.

Certaines de ces compositions sont difficilement transformables par des techniques connues car elles sont trop visqueuses.

De plus, la tenue à l'eau des compositions peut être insuffisante, ce qui en limite le champ d'application, par exemple à des utilisations en intérieur.

Certaines de ces compositions peuvent comprendre des quantités d'amidon thermoplastique, et donc de matière biosourcée, assez limitées.

Par ailleurs, un autre problème est que les compositions peuvent présenter des propriétés mécaniques médiocres. En effet, ces compositions sont généralement fragiles et peu déformables.

Ceci est particulièrement rédhibitoire pour les films, puisque leur résistance à la déchirure insuffisante les empêche de pouvoir être utilisés dans de nombreuses applications.

De plus, bien que filmables, ces compositions ne peuvent pas être utilisées aisément en extrusion soufflage de gaine, voire en extrusion de films en filière plate (en anglais *cast extrusion*). En effet, en utilisant ces compositions, on peut observer de nombreux trous (appelés également « larmes ») dans les films obtenus.

On peut également constater que le film obtenu comporte généralement des défauts esthétiques, notamment la présence de gels. Ces phénomènes sont exacerbés lorsque l'on transforme la composition sous forme de film avec une machine de transformation utilisant des hautes cadences industrielles.

Un autre inconvénient est que ces compositions ne sont pas toujours adaptées à la fabrication de films multicouches.

La Demanderesse a donc mené des recherches en vue de résoudre ces problèmes et a trouvé une composition permettant de résoudre au moins un des inconvénients cités précédemment.

### Résumé de l'invention

L'invention a ainsi pour objet une composition thermoplastique comprenant :

- au moins un amidon ;
- au moins un plastifiant de l'amidon ;
- au moins un polyéthylène ayant une densité comprise entre 0,910 et 0,935 ;
- au moins une polyoléfine fonctionnelle ;

ladite polyoléfine fonctionnelle étant un copolymère de propylène et d'au moins une seconde alpha-oléfine, comprenant en outre au moins un composé fonctionnel porteur d'au moins une fonction polaire, ledit copolymère comprenant par rapport à sa masse totale, de 45 à 95% en masse de motifs issus du propylène.

Sans être liée par une quelconque théorie, la Demanderesse explique ces meilleures propriétés par le fait que cette polyoléfine fonctionnelle particulière se lie très bien avec l'amidon thermoplastique au sein de la composition thermoplastique, et ceci bien que la nature chimique de la polyoléfine fonctionnelle soit très différente de celle de l'amidon ou du plastifiant de l'amidon.

Il en découle que la composition a des propriétés mécaniques améliorées.

Par ailleurs, cette composition peut être avantageusement utilisée pour la fabrication de films, puisqu'elle est particulièrement bien filmable, y compris sur des machines de mise en forme de films telles que les extrudeuses soufflage de gaine, voire les extrudeuses de film à filière plate.

La polyoléfine fonctionnelle peut être obtenue par différentes méthodes, soit par polymérisation du composé fonctionnel avec le propylène et la seconde alpha-oléfine, soit par greffage du composé fonctionnel sur un copolymère de propylène et d'une seconde alpha-oléfine.

Le composé fonctionnel porteur d'une fonction polaire présente de préférence, avant polymérisation ou greffage, un moment dipolaire supérieur à 1, de préférence supérieur à 2, tout préférentiellement supérieur à 3 Debyes.

Selon une variante, la polyoléfine fonctionnelle comprend par rapport à sa masse totale :

- de 45 à 95% de propylène ;
- de 4 à 40% d'alpha-oléfine différente du propylène ;
- plus de 0% et moins de 20% de composé fonctionnel ;

la somme de propylène, d'alpha-oléfine et de composé fonctionnel faisant 100%.

Selon une variante avantageuse, la polyoléfine fonctionnelle peut comprendre par rapport à sa masse totale :

- de 55 à 95% de propylène ;
- de 4 à 40% d'alpha-oléfine différente du propylène ;
- de 0,05% à 10% de composé fonctionnel ;

la somme de propylène, d'alpha-oléfine et de composé fonctionnel faisant 100%.

Préférentiellement, la polyoléfine fonctionnelle comprend par rapport à sa masse totale :

- de 70 à 94% de propylène ;
- de 5 à 25% d'alpha-oléfine différente du propylène ;
- de 0,1% à 5% de composé fonctionnel ;

la somme de propylène, d'alpha-oléfine et de composé fonctionnel faisant 100%.

Tout préférentiellement, la polyoléfine fonctionnelle comprend par rapport à sa masse totale :

- de 78 à 92,5% de propylène ;
- de 6,5 à 20% d'alpha-oléfine différente du propylène ;
- de 0,5% à 2% de composé fonctionnel ;

la somme de propylène, d'alpha-oléfine et de composé fonctionnel faisant 100%.

La composition selon l'invention comprend, en outre, au moins un polyéthylène ayant une densité comprise entre 0,910 et 0,935.

Ce polyéthylène présent peut être choisi parmi le polyéthylène très basse densité, le polyéthylène basse densité, le polyéthylène basse densité linéaire ou un mélange de ces polymères.

Ainsi, la composition comprend avantageusement, par rapport à sa masse totale, entre 0 et 85% de polyéthylène, par exemple entre 5 et 80%, avantageusement de 20 à 60%.

Le plastifiant de l'amidon peut être choisi parmi le glycérol, le sorbitol, le mannitol, le maltitol, des oligomères de ces polyols, le polyéthylène glycol, l'urée ou un mélange de ces plastifiants.

La composition comprend avantageusement, par rapport à sa masse totale, de 5 à 40% de plastifiant, avantageusement de 8 à 30%.

La composition comprend avantageusement, par rapport à sa masse totale, de 5 à 40% d'amidon, avantageusement de 8 à 35%.

Avantageusement, la composition comprend, par rapport à sa masse totale, de 5 à 90% de polyoléfine fonctionnelle, avantageusement de 10 à 30%.

Avantageusement, la composition comprend en outre entre 0 et 20% de constituant optionnel autre que l'amidon, le plastifiant de l'amidon, la polyoléfine fonctionnelle et le polyéthylène, ce constituant optionnel pouvant être choisi parmi les polymères et les additifs.

Selon une variante, la composition comprend, par rapport à sa masse totale :

- de 5 à 40% d'amidon, avantageusement de 8 à 35% ;
- de 5 à 40% de plastifiant, avantageusement de 8 à 30% ;
- de 5 à 90% de polyoléfine fonctionnelle, avantageusement de 10 à 30% ;
- entre 5 et 85% de polyéthylène, par exemple entre 5 et 80%, avantageusement de 20 à 60% ;
- éventuellement entre 0 et 20% d'un constituant optionnel autre que l'amidon, le plastifiant de l'amidon, la polyoléfine fonctionnelle et le polyéthylène, par exemple d'un additif ;

la somme des constituants faisant 100%.

La composition peut également comprendre comme constituant optionnel un additif agissant comme agent de liaison entre l'amidon, le plastifiant et/ou la polyoléfine fonctionnelle. Cet agent de liaison peut être choisi parmi les composés porteurs d'au moins deux fonctions, libres ou masquées, identiques ou différentes, choisies parmi les fonctions isocyanates, carbamoylcaprolactames, aldéhydes, époxydes, halogéno, acides protoniques, anhydrides d'acide, halogénures d'acyle, oxychlorures, trimétaphosphates, alcoxysilanes et des combinaisons de celles-ci.

Cet agent de liaison permet d'améliorer encore les propriétés mécaniques et la mise en forme de la composition sous forme de film.

La fonction polaire comprise sur la polyoléfine fonctionnelle peut être obtenue par polymérisation ou greffage d'un composé fonctionnel. Ce composé fonctionnel est porteur d'une fonction polaire et comprend préférentiellement au moins une double liaison carbone-carbone. Il est préférentiellement choisi parmi les anhydrides d'acide carboxylique insaturés, les acides carboxyliques insaturés, les oxiranes insaturés et les silanes insaturés, préférentiellement l'anhydride maléique.

La polyoléfine fonctionnelle peut être obtenue par différentes méthodes, soit par polymérisation du composé fonctionnel avec le propylène et la seconde alpha-oléfine, soit par greffage du composé fonctionnel sur un copolymère de propylène et d'alpha-oléfine.

Préférentiellement, la polyoléfine fonctionnelle est obtenue par greffage d'un copolymère de propylène et d'une deuxième alpha-oléfine par un composé fonctionnel. Autrement dit, la polyoléfine fonctionnelle est préférentiellement un copolymère de propylène et d'alpha-oléfine greffé par un composé fonctionnel. Ce dernier peut être choisi parmi les anhydrides d'acide carboxylique insaturés, les acides carboxyliques insaturés, les oxiranes insaturés et les silanes insaturés, préférentiellement l'anhydride maléique.

Ce copolymère de propylène et d'alpha-oléfine peut être un copolymère à blocs ou un copolymère statistique.

Avantageusement, la polyoléfine fonctionnelle comprend, par rapport à sa masse totale, de 0,1 à 5% en masse de composé fonctionnel, avantageusement de 0,5 à 2% en masse.

La seconde alpha-oléfine de la polyoléfine fonctionnelle est préférentiellement choisie parmi l'éthylène et le 1-butène.

Préférentiellement, la polyoléfine fonctionnelle comprend de 80 à 93% en masse de propylène par rapport à sa masse totale.

La polyoléfine fonctionnelle peut avoir une densité allant de 0,855 à 0,900, par exemple de 0,860 à 0,880.

La polyoléfine fonctionnelle présente avantageusement un indice de fluidité à l'état fondu (MFI)(2,16kg, 190°C, ASTM D-1238) allant de 1 à 50 g/10 min, par exemple de 5 à 30 g/10 min.

La polyoléfine fonctionnelle de la composition présente avantageusement une température de fusion de 40°C à 140°C, par exemple de 60°C à 100°C.

Lorsque l'on observe la morphologie de la composition selon l'invention, par exemple par microscopie électronique à balayage, cette composition se présente généralement sous forme de dispersions de domaines d'amidon thermoplastique dans une phase continue de polyoléfine. Avantageusement, au moins 90% en nombre des domaines d'amidon plastifié ont une taille inférieure à $1\mu m$, préférentiellement inférieure à $0,8\mu m$.

Un autre objet de l'invention porte sur un film comprenant la composition selon l'invention. En effet, comme expliqué précédemment, la composition selon l'invention présente une très bonne filmabilité et les propriétés du film obtenu, en particulier ses propriétés mécaniques et d'aspect, sont excellentes.

Les propriétés de ladite composition lui permettent d'être avantageusement utilisée pour la fabrication de films monocouches ou multicouches.

La composition selon l'invention peut être fabriquée très simplement, par exemple par un procédé comprenant au moins une étape de mélange à l'état fondu ou ramolli des différents constituants et une étape de récupération de la composition.

Il est précisé que les différentes variantes de l'invention présentées ci-dessus et ci-dessous sont bien évidemment combinables entre elles.

## Description détaillée de l'invention

L'invention a pour objet une composition thermoplastique comprenant :

- au moins un amidon ;
- au moins un plastifiant de l'amidon ;
- au moins un polyéthylène ayant une densité comprise entre 0,910 et 0,935 ;
- au moins une polyoléfine fonctionnelle telle que définie précédemment.

Une composition thermoplastique est une composition qui, de manière réversible, se ramollit sous l'action de la chaleur et se durcit en se refroidissant à température ambiante. Elle présente au moins une température de transition vitreuse (Tg) en dessous de laquelle la fraction amorphe de la composition est à l'état vitreux cassant, et au-dessus de laquelle la composition peut subir des déformations plastiques réversibles. La température de transition vitreuse ou l'une, au moins, des températures de transition vitreuse de la composition thermoplastique à base d'amidon de la présente invention est de préférence comprise entre -150°C et 30°C. Cette composition à base d'amidon peut, bien entendu, être mise en forme par les procédés utilisés traditionnellement en plasturgie, tels que l'extrusion, l'injection, le moulage, le soufflage et le calandrage. Sa viscosité, mesurée à une température de 100 °C à 200°C, est généralement comprise entre 10 et $10^6$Pa.s.

L'amidon compris dans la composition peut être de tout type. Si l'on souhaite obtenir une composition de plus bas coût, l'amidon préférentiellement utilisé pour la fabrication de la composition est un amidon granulaire, de préférence un amidon natif.

On entend ici par « amidon granulaire », un amidon natif ou modifié physiquement, chimiquement ou par voie enzymatique, ayant conservé, au sein des granules d'amidon, une structure semi-cristalline similaire à celle mise en évidence dans les grains d'amidon présents naturellement dans les organes et tissus de réserve des végétaux supérieurs, en particulier dans les graines de céréales, les graines de légumineuses, les tubercules de pomme de terre ou de manioc, les racines, les bulbes, les tiges et les fruits. A l'état natif, les grains d'amidon présentent un taux de cristallinité qui varie de 15 à 45 %, et qui dépend essentiellement de l'origine botanique de l'amidon et du traitement éventuel qu'il a subi. L'amidon granulaire, placé sous lumière polarisée, présente une croix noire caractéristique, dite croix de Malte, typique de l'état granulaire.

Selon l'invention, l'amidon granulaire peut provenir de toutes origines botaniques, y compris un amidon granulaire riche en amylose ou, inversement, riche en amylopectine (waxy). Il peut s'agir d'amidon natif de céréales telles que le blé, le maïs, l'orge, le triticale, le sorgo ou le riz, de tubercules tels que la pomme de terre ou le manioc, ou de légumineuses telles que le pois et le soja, et de mélanges de tels amidons.

Selon une variante, l'amidon granulaire est un amidon hydrolysé par voie acide, oxydante ou enzymatique, ou un amidon oxydé. Il peut s'agir d'un amidon communément appelé amidon fluidifié ou d'une dextrine blanche.

Selon une autre variante, il peut s'agir également d'un amidon modifié par voie physico-chimique mais ayant essentiellement conservé la structure de l'amidon natif de départ, comme notamment les amidons estérifiés et/ou éthérifiés, en particulier modifiés par acétylation, hydroxypropylation, cationisation, réticulation, phosphatation, ou succinylation, ou les amidons traités en milieu aqueux à basse température (en anglais « annealing »). De préférence, l'amidon granulaire est un amidon natif, hydrolysé, oxydé ou modifié, en particulier de maïs, de blé ou de pois. L'amidon granulaire présente généralement un taux de solubles à 20°C dans l'eau déminéralisée, inférieur à 5 % en masse. Il est de préférence quasiment insoluble dans l'eau froide.

Selon une seconde variante, l'amidon sélectionné comme amidon utile à la fabrication de la composition est un amidon hydrosoluble, pouvant provenir aussi de toutes origines botaniques, y compris un amidon hydrosoluble riche en amylose ou, inversement, riche en amylopectine (waxy). Cet amidon hydrosoluble peut être introduit en remplacement partiel ou total de l'amidon granulaire.

On entend au sens de l'invention par « amidon hydrosoluble», tout composant amylacé présentant à 20°C et sous agitation mécanique pendant 24 heures, une fraction soluble dans de l'eau déminéralisée au moins égale à 5 % en poids. Cette fraction soluble est de préférence supérieure à 20% en poids et en particulier supérieure à 50% en poids. Bien entendu, l'amidon hydrosoluble peut être totalement soluble dans l'eau déminéralisée (fraction soluble = 100 %).

De tels amidons hydrosolubles peuvent être obtenus par prégélatinisation sur tambour, par prégélatinisation sur extrudeuse, par atomisation d'une suspension ou d'une solution amylacée, par précipitation par un non-solvant, par cuisson hydro-thermique, par fonctionnalisation chimique ou autre. Il s'agit en particulier d'un amidon prégélatinisé, extrudé ou atomisé, d'une dextrine hautement transformée (appelée aussi dextrine jaune), d'une maltodextrine, d'un amidon fonctionnalisé ou d'un mélange quelconque de ces produits.

Les amidons prégélatinisés peuvent être obtenus par traitement hydro-thermique de gélatinisation d'amidons natifs ou d'amidons modifiés, en particulier par cuisson vapeur, cuisson jet-cooker, cuisson sur tambour, cuisson dans des systèmes de malaxeur/extrudeur puis séchage par exemple en étuve, par air chaud sur lit fluidisé, sur tambour rotatif, par atomisation, par extrusion ou par lyophilisation. De tels amidons présentent généralement une solubilité dans l'eau déminéralisée à 20°C supérieure à 5 % et plus généralement comprise entre 10 et 100% et un taux de cristallinité en amidon inférieur à 15%, généralement inférieur à 5% et le plus souvent inférieur à 1%, voire nul. A titre d'exemple, on peut citer les produits fabriqués et commercialisés par la Demanderesse sous le nom de marque PREGEFLO®.

Les dextrines hautement transformées peuvent être préparées à partir d'amidons natifs ou modifiés, par dextrinification en milieu acide peu hydraté. Il peut s'agir en particulier de dextrines blanches solubles ou de dextrines jaunes. A titre d'exemple, on peut citer les produits STABILYS® A 053 ou TACKIDEX® C 072 fabriqués et commercialisés par la Demanderesse. De telles dextrines présentent dans l'eau déminéralisée à 20°C, une solubilité comprise généralement entre 10 et 95 % et une cristallinité en amidon inférieure à 15% et généralement inférieure à 5%.

Les maltodextrines peuvent être obtenues par hydrolyse acide, oxydante ou enzymatique d'amidons en milieu aqueux. Elles peuvent présenter en particulier un dextrose équivalent (DE) compris entre 0,5 et 40, de préférence entre 0,5 et 20 et mieux encore entre 0,5 et 12. De telles maltodextrines sont par exemple fabriquées et commercialisées par la Demanderesse sous l'appellation commerciale GLUCIDEX® et présentent une solubilité dans l'eau déminéralisée à 20°C généralement supérieure à 90%, voire proche de 100%, et une cristallinité en amidon généralement inférieure à 5% et d'ordinaire quasiment nulle.

Les amidons fonctionnalisés peuvent être obtenus à partir d'un amidon natif ou modifié. La fonctionnalisation peut par exemple être réalisée par estérification ou éthérification à un niveau suffisamment élevé pour lui conférer une solubilité dans l'eau. De tels amidons fonctionnalisés présentent une fraction soluble telle que définie ci-dessus, supérieure à 5 %, de préférence supérieure à 10 %, mieux encore supérieure à 50%.

La fonctionnalisation peut s'obtenir en particulier par acétylation en phase aqueuse avec de l'anhydride acétique, par réaction avec des anhydrides mixtes, par hydroxypropylation en phase colle, par cationisation en phase sèche ou phase colle, par anionisation en phase sèche ou phase colle par phosphatation ou succinylation. Les amidons hautement fonctionnalisés hydrosolubles obtenus peuvent présenter un degré de substitution compris entre 0,01 et 3, et mieux encore compris entre 0,05 et 1.

De préférence, les réactifs de modification ou de fonctionnalisation de l'amidon sont d'origine renouvelable.

Selon une autre variante avantageuse, l'amidon hydrosoluble est un amidon hydrosoluble de maïs, de blé ou de pois, ou un dérivé hydrosoluble de ceux ci.

De plus, il présente avantageusement une faible teneur en eau, généralement inférieure à 10 %, de préférence inférieure à 5 %, en particulier inférieure à 2,5 % en poids, et idéalement inférieure à 0,5 %, voire inférieure à 0,2 % en poids.

Selon une troisième variante, le composant amylacé sélectionné pour la préparation de la composition est un amidon organomodifié, de préférence organosoluble, pouvant provenir aussi de toutes origines botaniques, y compris un amidon organomodifié, de préférence organosoluble, riche en amylose ou, inversement, riche en amylopectine (waxy). Cet amidon organosoluble peut être introduit en remplacement partiel ou total de l'amidon granulaire ou de l'amidon hydrosoluble.

On entend au sens de l'invention par « amidon organomodifié», tout composant amylacé autre qu'un amidon granulaire ou un amidon hydrosoluble selon les définitions données ci-avant. De préférence, cet amidon organomodifié est quasiment amorphe, c'est à dire présentant un taux de cristallinité en amidon inférieur à 5 %, généralement inférieur à 1% et notamment nul. Il est aussi de préférence « organosoluble », c'est à dire présentant à 20°C, une fraction soluble dans un solvant choisi parmi l'éthanol, l'acétate d'éthyle, l'acétate de propyle, l'acétate de butyle, le carbonate de diéthyle, le carbonate de propylène, le glutarate de diméthyle, le citrate de triéthyle, les esters dibasiques, le diméthylsulfoxide (DMSO), le diméthylisosorbide, le triacétate de glycérol, le diacétate d'isosorbide, le dioléate d'isosorbide et les esters méthyliques d'huiles végétales, au moins égale à 5% en poids. Cette fraction soluble est de préférence supérieure à 20% en poids et en particulier supérieure à 50% en poids. Bien entendu, l'amidon organosoluble peut être totalement soluble dans l'un ou plusieurs des solvants indiqués ci-dessus (fraction soluble = 100%).

L'amidon organomodifié peut être utilisé selon l'invention sous forme solide, y compris présentant une teneur en eau peu élevée, à savoir inférieure à 10% en poids. Elle peut notamment être inférieure à 5 %, en particulier inférieure à 2,5% en poids et idéalement inférieure à 0,5%, voire inférieure à 0,2% en poids.

L'amidon organomodifié utilisable dans la composition selon l'invention peut être préparé par une fonctionnalisation des amidons natifs ou modifiés tels que ceux présentés ci-avant. Cette fonctionnalisation peut par exemple être réalisée par estérification ou éthérification à un niveau suffisamment élevé pour le rendre essentiellement amorphe et pour lui conférer une insolubilité dans l'eau et de préférence une solubilité dans l'un des solvants organiques ci-dessus. De tels amidons fonctionnalisés présentent une fraction soluble telle que définie ci-dessus, supérieure à 5 %, de préférence supérieure à 10 %, mieux encore supérieure à 50%. La fonctionnalisation peut s'obtenir en particulier par acétylation en phase solvant par l'anhydride acétique, greffage, par exemple en phase solvant ou par extrusion réactive d'anhydrides d'acides, d'anhydrides mixtes, de chlorures d'acides gras, d'oligomères de caprolactones ou de lactides, hydroxypropylation et réticulation en phase colle, cationisation et réticulation en phase sèche ou en phase colle, anionisation par phosphatation ou succinylation, et réticulation en phase sèche ou en phase colle, silylation, télomérisation au butadiène. Ces amidons hautement fonctionnalisés organomodifiés, de préférence organosolubles, peuvent être en particulier des acétates d'amidons, de dextrines ou de maltodextrines ou des esters gras de ces matières amylacées (amidons, dextrines, maltodextrines) avec des chaines grasses de 4 à 22 carbones, l'ensemble de ces produits présentant de préférence un degré de substitution (DS) compris entre 0,5 et 3,0, de préférence compris entre 0,8 et 2,8 et notamment compris entre 1,0 et 2,7.

Il peut s'agir, par exemple, d'hexanoates, d'octanoates, de décanoates, de laurates, de palmitates, d'oléates et de stéarates d'amidon, de dextrines ou de maltodextrines, en particulier présentant un DS compris entre 0,8 et 2,8.

Selon une autre variante avantageuse, l'amidon organomodifié est un amidon organomodifié de maïs, de blé ou de pois ou un dérivé organomodifié de ceux-ci.

La composition comprend, par rapport à sa masse totale, de 5 à 40% en masse d'amidon. De préférence, la composition comprend de 8 à 35% d'amidon.

La composition comprend en outre un plastifiant de l'amidon, qui a pour fonction de déstructurer l'amidon. Ce plastifiant peut être de tout type et est avantageusement choisi parmi le glycérol, le sorbitol, le mannitol, le maltitol, des oligomères de ces polyols, le polyéthylène glycol, l'urée ou un mélange de ces plastifiants.

Le plastifiant présente de façon avantageuse une masse molaire inférieure à 1000 g.mol$^{-1}$, et en particulier inférieure à 400 g.mol$^{-1}$.

Le plastifiant de l'amidon, tout particulièrement lorsque ce dernier est organomodifié, est de préférence choisi parmi les esters méthyliques, éthyliques ou les esters gras d'acides organiques tels que les acides lactique, citrique, succinique, adipique et glutarique et les esters acétiques ou esters gras de mono-alcools, diols, triols ou polyols tels que l'éthanol, le diéthylène glycol, le glycérol et le sorbitol. A titre d'exemple, on peut citer le diacétate de glycérol (diacétine), le triacétate de glycérol (triacétine), le diacétate d'isosorbide, le dioctanoate d'isosorbide, le dioléate d'isosorbide, le dilaurate d'isosorbide, les esters d'acides dicarboxyliques ou esters dibasiques (DBE de l'anglais dibasic esters) et les mélanges de ces produits.

Le plastifiant est généralement présent dans la composition à raison de 1 à 150 parts en poids, de préférence à raison de 10 à 120 parts en poids et en particulier à raison de 25 à 120 parts en poids pour 100 parts en poids d'amidon.

La composition comprend, par rapport à sa masse totale, de 5 à 40% d'au moins un plastifiant de l'amidon. De préférence, la composition comprend de 8 à 30% de plastifiant.

La sélection de la polyoléfine fonctionnelle a permis à la Demanderesse d'obtenir une composition thermoplastique aux propriétés améliorées.

Cette polyoléfine fonctionnelle est un copolymère obtenu à partir de propylène et d'au moins une seconde alpha-oléfine, ce copolymère portant en outre au moins une fonction polaire.

La fonction polaire comprise sur la polyoléfine fonctionnelle est obtenue à l'aide d'un composé fonctionnel. Ce composé fonctionnel comprend préférentiellement au moins une double liaison carbone-carbone. Il est préférentiellement choisi parmi les anhydrides d'acide carboxylique insaturés, les acides carboxyliques insaturés, les oxiranes insaturés et les silanes insaturés, préférentiellement l'anhydride maléique La polyoléfine fonctionnelle peut être obtenue par différentes méthodes, soit par polymérisation du composé fonctionnel avec le propylène et la seconde alpha-oléfine, soit par greffage du composé fonctionnel sur un copolymère de propylène et d'alpha-oléfine.

Selon l'invention, lorsqu'un polymère comprend un composé fonctionnel, cela signifie que le polymère comprend des motifs issus de la polymérisation ou du greffage d'un composé de ce type.

La polyoléfine fonctionnelle comprend généralement par rapport à sa masse totale, de 45 à 95% en masse de motifs issus du propylène.

La polyoléfine fonctionnelle comprend en outre au moins une seconde alpha-oléfine différente du propylène. Celle-ci peut être choisie parmi l'éthylène, le 1-butène, le 1-pentène, le 1-hexène, le 1-heptène, le 1-octène, le 1-nonène et le 1-décène. Elle est avantageusement choisie parmi l'éthylène ou le 1-butène, préférentiellement l'éthylène. La polyoléfine fonctionnelle peut comprendre par rapport à sa masse totale de 4 à 40% en masse de motifs issus d'alpha-oléfine différente du propylène.

Le composé fonctionnel porteur d'au moins une fonction polaire est apte à réagir avec les autres monomères compris dans la polyoléfine fonctionnelle ou est apte à réagir par greffage d'une polyoléfine afin de former une polyoléfine fonctionnelle utile à l'invention.

Le composé fonctionnel porte une fonction chimique présentant un moment dipolaire. Le composé fonctionnel comprend préférentiellement au moins un atome d'oxygène. Ce composé fonctionnel est par exemple un anhydride d'acide carboxylique insaturé, un acide carboxylique insaturé ou les sels de cet acide, un ester d'acide carboxylique insaturé, un ester vinylique d'acide carboxylique, un oxirane insaturé ou un silane insaturé.

L'anhydride d'acide carboxylique comprend préférentiellement de 4 à 30 atomes de carbone : il peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, et bicyclo (2,2,1) hept-5-ène-2,3-dicarboxylique.

L'acide carboxylique insaturé ou ses sels comprend préférentiellement de 2 à 30 atomes de carbone, et peuvent être notamment choisis parmi l'acide acrylique ou l'acide méthacrylique et les sels de ces mêmes acides.

L'ester d'acide carboxylique insaturé est avantageusement choisi parmi les acrylates d'alkyle ou les méthacrylates d'alkyle, regroupés sous le terme (méth)acrylates d'alkyles. Les groupes alkyles de ces (méth)acrylates peuvent avoir jusqu'à 30 atomes de carbone. On peut citer comme groupe alkyle les groupes méthyle, éthyle, propyle, n-butyle, sec-butyle, isobutyle, tert-butyle, pentyle, hexyle, heptyle, octyle, 2-éthylhexyle, nonyle, décyle, undécyle, dodécyle, tridécyle, tétradécyle, pentadécyle, hexadécyle, heptadécyle, octadécyle, nonadécyle, eicosyle, hencosyle, docosyle, tricosyle, tétracosyle, pentacosyle, hexacosyle, heptacosyle, octacosyle, nonacosyle. A titre d'exemple d'ester vinylique d'acide carboxylique, on peut citer l'acétate de vinyle, le versatate de vinyle, le propionate de vinyle, le butyrate de vinyle ou le maléate de vinyle.

L'oxirane insaturé, encore appelé époxyde insaturé, peut être choisi parmi les esters et éthers de glycidyle aliphatiques tels que l'allylglycidyléther, le vinylglycidyléther, le maléate et l'itaconate de glycidyle, l'acrylate et le méthacrylate de glycidyle, les esters et éthers de glycidyle alicycliques tels que le 2-cyclohexène-4,5-diglycidylcarboxylate, le cyclohexène-4-glycidyl carboxylate, le 5-norbornène-2-méthyl-2-glycidyl carboxylate et l'endo-cis-bicyclo(2,2,1)-5-heptène-2,3-diglycidyldicarboxylate. Préférentiellement, l'oxirane insaturé est choisi parmi l'acrylate et le méthacrylate de glycidyle.

Le silane insaturé peut être choisi parmi les 3-méthacryloyloxypropyltrialcoxysilanes, les 3-méthacryloyloxypropyldialcoxyalkylsilanes, les méthacryloyloxyméthyltrialcoxysilanes, les (méthacryloyloxyméthyl)dialcoxysilanes, les vinyldialcoxyalkylsilanes et les vinyltrialcoxysilanes.

Tout préférentiellement, on utilise l'anhydride maléique comme composé fonctionnel insaturé.

La polyoléfine fonctionnelle peut comprendre, par rapport à sa masse totale, plus de 0% et moins de 20%, avantageusement de 0,05% à 10%, préférentiellement de 0,1 à 5%, tout préférentiellement de 0,5 à 2% en masse de composé fonctionnel.

La polyoléfine fonctionnelle est un copolymère comprenant, par rapport à sa masse totale, de 45 à 95% en masse de motifs issus du propylène. Avantageusement, la polyoléfine fonctionnelle comprend de 55 à 95%, de préférence de 70 à 94%, par exemple de 78 à 92,5% en masse de propylène.

Selon une variante, la polyoléfine fonctionnelle comprend par rapport à sa masse totale :

- de 45 à 95% de propylène ;
- de 4 à 40% d'alpha-oléfine différente du propylène ;
- plus de 0% et moins de 20% de composé fonctionnel ;

la somme de propylène, d'alpha-oléfine et de composé fonctionnel faisant 100%.

Selon une variante avantageuse, la polyoléfine fonctionnelle peut comprendre par rapport à sa masse totale :

- de 55 à 95% de propylène ;
- de 4 à 40% d'alpha-oléfine différente du propylène ;
- de 0,05% à 10% de composé fonctionnel ;

la somme de propylène, d'alpha-oléfine et de composé fonctionnel faisant 100%.

Préférentiellement, la polyoléfine fonctionnelle comprend par rapport à sa masse totale :

- de 70 à 94% de propylène ;
- de 5 à 25% d'alpha-oléfine différente du propylène ;
- de 0,1% à 5% de composé fonctionnel ;

la somme de propylène, d'alpha-oléfine et de composé fonctionnel faisant 100%.

Tout préférentiellement, la polyoléfine fonctionnelle comprend par rapport à sa masse totale :

- de 78 à 92,5% de propylène ;
- de 6,5 à 20% d'alpha-oléfine différente du propylène ;
- de 0,5% à 2% de composé fonctionnel ;

la somme de propylène, d'alpha-oléfine et de composé fonctionnel faisant 100%.

La polyoléfine fonctionnelle peut présenter une densité allant de 0,855 à 0,900, par exemple de 0,860 à 0,880.

La polyoléfine fonctionnelle présente avantageusement un indice de fluidité à l'état fondu (MFI) (2,16kg, 190°C, ASTM D-1238) allant de 0,1 à 200 g/10 min, par exemple de 1 à 50 g/10 min, tout préférentiellement de 5 à 30 g/10 min. Elle présente préférentiellement une température de fusion de 40°C à 140°C, par exemple de 60°C à 100°C. Les quantités des différents monomères dans la polyoléfine fonctionnelle peuvent être déterminées par les méthodes classiques, typiquement par spectroscopie infrarouge à transformée de Fourrier.

La polyoléfine fonctionnelle peut être obtenue par greffage du composé fonctionnel sur un copolymère comprenant le propylène et la seconde alpha-oléfine. Ces copolymères sont généralement obtenus par polymérisation catalytique du propylène et de la seconde alpha-oléfine.

Les copolymères de propylène utiles à la fabrication par greffage de la polyoléfine fonctionnelle peuvent être des copolymères à blocs ou des copolymères statistiques. Ils sont commercialisés par exemple sous la marque Adflex® ou Hifax®par la société Lyondellbasell®ou encore par Vistamaxx®par Exxonmobil®.

Si on greffe le composé fonctionnel sur un copolymère à blocs, la polyoléfine fonctionnelle obtenue est un copolymère à blocs. Inversement, si on greffe le composé fonctionnel sur un copolymère statistique, la polyoléfine fonctionnelle obtenue est un copolymère statistique.

Selon un mode de l'invention, le copolymère utile à l'obtention de la polyoléfine fonctionnelle est mélangé avant greffage avec une seconde polyoléfine de manière thermomécanique pour obtenir un mélange de polyoléfines, appelé dans la suite « mélange greffé de polyoléfines». Ce mélange de polyoléfines est ensuite greffé par le monomère fonctionnel. Un avantage de l'utilisation de ce mélange greffé par un monomère fonctionnel est que la composition comprenant ce mélange greffé présente une filmabilité supérieure. Les cadences de production de film obtenu à partir de ce type de composition peuvent encore être augmentées. Selon ce mode de réalisation, le copolymère et la seconde polyoléfine sont avantageusement mélangés selon un ratio massique allant de 10/90 à 90/10, préférentiellement allant de 30/70 à 70/30. En ce qui concerne les quantités de chacun des constituants, il est précisé que lorsque l'on greffe un mélange comprenant une quantité A de copolymère et une quantité B de seconde polyoléfine, on considère que le mélange greffé comprend cette même quantité A de polyoléfine fonctionnelle utile à l'invention et cette même quantité B de seconde polyoléfine greffée. Avantageusement, la seconde polyoléfine est un polyéthylène, par exemple un polyéthylène ayant une densité comprise entre 0,905 et 0,935.

Le greffage des polyoléfines est une opération connue en soi et l'homme du métier saura adapter le procédé qui suit pour obtenir la polyoléfine fonctionnelle désirée et utile à l'invention.

La réaction de greffage peut être réalisée selon un procédé batch en solution ou, préférentiellement, selon un procédé continu avec un outil de mélange en fondu ces procédés étant bien connus de l'homme du métier. Comme outil de mélange en fondu, on peut utiliser les mélangeurs internes, les mélangeurs à cylindre, les extrudeuses monovis, bi-vis contra ou co-rotatives, les extrudeuses planétaires, les co-malaxeurs continus. L'outil de greffage peut être l'un des outils cités ci-dessus ou leur association, comme par exemple un comalaxeur associé à une extrudeuse monovis, ou une extrudeuse bi-vis corotative associée à une pompe. Dans le cas d'une extrusion, l'outil comprend de préférence une zone de fusion du polymère, une zone de mélange et réaction entre les espèces présentes et une zone de détente/dégazage pour éliminer les composés volatils. L'outil peut être équipé d'un système de pompage de la matière fondue et/ou d'un système de filtration et/ou d'un système de granulation à joncs ou sous eau.

Le copolymère est introduit en présence d'un générateur de radicaux et du composé fonctionnel dans l'outil, dont la température du corps est régulée, cette température étant choisie en adéquation avec la cinétique de décomposition du générateur de radicaux. On peut utiliser comme générateur de radicaux pour le greffage continu les peroxydes organiques tels que les peroxydes de dialkyle, les hydroperoxydes ou les peroxycétals. Préférentiellement, on utilise une température allant de 100 à 300°C, plus préférentiellement de 180 à 250°C.

Le copolymère, le composé fonctionnel et le générateur de radicaux peuvent être introduits simultanément ou séparément dans l'outil d'extrusion. En particulier, le composé fonctionnel et/ou le générateur de radicaux peuvent être introduits simultanément avec le copolymère en alimentation principale, soit séparément en injection le long de l'outil. A l'étape d'injection, on peut associer au composé fonctionnel et/ou au générateur de radicaux une fraction d'un co-agent de greffage du copolymère, par exemple du styrène. Cette fraction de co-agent de greffage du copolymère a pour but de faciliter et accélérer le greffage de l'agent fonctionnel et améliorer ainsi le rendement de la réaction. Lors d'une étape de détente/dégazage, on applique un vide adapté pour dévolatiliser des composés volatils, le niveau de vide pouvant aller quelques millibars à plusieurs centaines.

Le copolymère greffé utile à l'invention peut être récupéré en sortie de l'outil d'extrusion sous forme de granulé à l'aide d'un outil de granulation.

La composition selon l'invention comprend en outre au moins un polyéthylène ayant une densité comprise entre 0,910 et 0,935. Ce polyéthylène peut être choisi parmi le polyéthylène très basse densité, le polyéthylène basse densité, le polyéthylène basse densité linéaire ou un mélange de ces polymères.

Le polypropylène et le polyéthylène sont naturellement très peu compatibles. Les mélanges en résultant présentent généralement des propriétés mécaniques inférieures à celles du polyéthylène seul ou du polypropylène seul. De manière surprenante, bien que la polyoléfine fonctionnelle soit une polyoléfine comprenant majoritairement du propylène, la Demanderesse est parvenue, à obtenir une composition présentant d'excellentes propriétés, supérieures à celles d'une composition identique à la différence près que la polyoléfine fonctionnelle est un polyéthylène greffé ou un polypropylène greffé.

Le polyéthylène peut être obtenu par polymérisation radicalaire, notamment en polymérisation à haute pression ou de manière catalytique, par exemple par catalyse Phillips, Ziegler-Natta ou métallocène.

La composition selon l'invention peut comprendre en outre, par rapport à sa masse totale, entre 0 et 20% de constituant optionnel autre que l'amidon, le plastifiant de l'amidon, la polyoléfine fonctionnelle et le polyéthylène.

Ce constituant optionnel peut être choisi parmi les additifs et les polymères différents de l'amidon, de la polyoléfine fonctionnelle et du polyéthylène.

Le polymère optionnel peut ainsi être une polyoléfine fonctionnelle autre que la polyoléfine fonctionnelle utile à l'invention. Dans le cas où la polyoléfine fonctionnelle est comprise dans un mélange greffé de polyoléfines tel que décrit précédemment, la composition comprend donc également une certaine quantité de seconde polyoléfine greffée autre que la polyoléfine fonctionnelle utile à l'invention.

Les additifs, usuels à la fabrication des thermoplastiques, sont susceptibles d'améliorer au moins une des propriétés finales de la composition et/ou de faciliter le procédé de fabrication de ladite composition. Les additifs usuels peuvent être choisis parmi les antioxydants, les stabilisants, les absorbants UV, les agents antistatiques, les azurants optiques, les colorants ou les pigments, les agents nucléants, les agents retardateurs de flamme, les agents lubrifiants, les agents antibloquants, les agents promoteurs d'impression, les agents anti-électrostatiques, les agents de démoulage, les agents anti-mottant, les antimicrobiens, les plastifiants, les anti-buée et les agents d'expansion. La composition peut également comprendre comme additifs usuels des renforts ou des charges, par exemple des fibres naturelles végétales telles que la sciure de bois, les fibres de bois ou les fibres de chanvre.

Le constituant optionnel peut également être un additif ayant pour fonction d'agent de liaison entre l'amidon, le plastifiant et/ou la polyoléfine fonctionnelle, cet agent de liaison étant choisi parmi les composés porteurs d'au moins deux fonctions, libres ou masquées, identiques ou différentes, choisies parmi les fonctions isocyanates, carbamoylcaprolactames, aldéhydes, époxydes, halogéno, acides protoniques, anhydrides d'acide, halogénures d'acyle, oxychlorures, trimétaphosphates, alcoxysilanes et des combinaisons de celles-ci. Avantageusement, la quantité d'agent de liaison va de 0,01 à 15% en masse de la composition, de préférence de 0,1 à 5%. Une liste de ces agents de liaison figure dans la demande WO2009095618 au nom de la Demanderesse.

Cet additif peut être introduit dans la composition selon le procédé de la fabrication décrit ci-après.

La composition selon l'invention peut être fabriquée par les méthodes classiques de transformation des thermoplastiques. Ces méthodes classiques comprennent au moins une étape de mélange à l'état fondu ou ramolli des différents constituants et une étape de récupération de la composition. On peut réaliser ce procédé dans des mélangeurs interne à pales ou à rotors, un mélangeur externe, des extrudeuses mono-vis, bi-vis co-rotatives ou contrarotatives. Toutefois, on préfère réaliser ce mélange par extrusion, notamment en utilisant une extrudeuse co-rotative.

Le mélange des constituants de la composition peut se faire à une température allant de 80 à 300 °C, par exemple de 100 à 250 °C.

Dans le cas d'une extrudeuse, on peut introduire les différents constituants de la composition à l'aide de trémies d'introduction situées le long de l'extrudeuse.

On peut utiliser le procédé décrit dans la demande WO2009095618 dans lequel l'amidon thermoplastique est mélangé thermomécaniquement à la polyoléfine et la polyoléfine fonctionnelle.

Toutefois, on préfère utiliser particulièrement un procédé de préparation de la composition comprenant l'introduction de l'amidon et d'un plastifiant de celui-ci, dans un réacteur contenant un mélange de polyoléfine et de polyoléfine fonctionnelle ramollies ou fondues, et le malaxage du mélange obtenu dans des conditions suffisantes pour obtenir la plastification de l'amidon par le plastifiant afin d'obtenir la composition selon l'invention. Ce procédé est décrit en détail dans la demande WO2010010282 au nom de la Demanderesse.

Le procédé de préparation de la composition comprend de préférence une étape d'élimination des volatils tels que l'eau, par exemple à l'aide d'une pompe sous vide.

La composition ainsi obtenue peut être utilisée telle quelle, ou être mélangée ultérieurement à d'autres constituants avant utilisation.

La composition ainsi obtenue présente avantageusement un indice de fluidité volumique à l'état fondu (MVR) (190°C, 10 kg) allant avantageusement de 1 à 50 $cm^3$/10 min, avantageusement de 2 à 30 $cm^3$/10min.

De manière générale, l'invention porte également sur un article comprenant ladite composition thermoplastique. Cet article peut être de tout type d'objet, notamment un film, une feuille, une barquette, un flacon, une bouteille, un réservoir, une poche, un tube, un tuyau, un seau, une caisse, un tableau de bord, un manche d'outil, une poignée de porte ou encore un tapis.

Ces articles peuvent être fabriqués par les méthodes classiques de transformation des thermoplastiques. Il peut ainsi s'agir de films obtenus par extrusion-gonflage ou par extrusion sur filière plate, de pièces moulées, de profilés obtenus par extrusion, de pièces injectées, de pièces obtenues par thermoformage ou rotomoulage.

Les articles selon l'invention peuvent également des articles comprenant une structure multicouche et dans laquelle au moins une des couches comprend la composition selon l'invention.

Le ou les autres couches de la structure selon l'invention peuvent comprendre au moins une couche à base de métal ou de polymère organique. Il est précisé que le terme « à base de » signifie que la couche comprend au moins 10% en poids dudit constituant (métal ou polymère organique). Préférentiellement, la couche à base de polymère organique comprend au moins 50% en masse de polymère organique, préférentiellement au moins 70%, en particulier au moins 90% de polymère organique. A titre de polymère organique, on peut citer :

■ les homopolymères et les copolymères de l'éthylène (PE) tels que le polyéthylène haute densité (PEHD), le polyéthylène basse densité (PEBD), le polyéthylène basse densité linéaire (PEBDL), le copolymère éthylène-co-acétate de vinyle (EVA), les copolymères éthylène-co-acrylate d'alkyle, les copolymères éthylène-co-méthacrylate d'alkyle, le copolymère éthylène-co-acide acrylique, le copolymère éthylène-co-acide méthacrylique, le copolymère éthylène-co-alcool vinylique (EVOH) ;

■ le poly (alcool vinylique) (PVOH) ;

■ les homopolymères ou les copolymères du propylène (PP) tels que le polypropylène isotactique (iPP) ou le polypropylène atactique (aPP) ;

■ les homopolyamides et les copolyamides (PA) tels que le polyamide 6 (PA6), le polyamide 6.6 (PA6.6), le polyamide 11 (PA11), le polyamide 12 (PA12) ;

■ les homopolymères et les copolymères du styrène tels que le polystyrène cristal, le poly(styrène-co-butadiène), le poly(styrène-co-acrylonitrile) (SAN), le poly(acrylonitrile-co-butadiène-co-styrène) (ABS), le poly(acrylonitrile-co-styrène-co-acrylate) (ASA) ;

■ les polyesters tel que le polyéthylène téréphtalate (PET), le polybutylène téréphtalate (PBT), le poly(acide glycolique) (PGA), le poly(acide lactique) (PLA), le polycaprolactone (PCL), le poly(butylène succinate) (PBS), poly(butylène adipate) (PBA), poly(éthylène succinate) et poly(éthylène adipate) ;
■ les polymères chlorés et les polymères fluorés ;
■ les amidons thermoplastiques (TPS) ;
■ ou un de leurs mélanges.

On peut également citer la cellulose comme polymère organique utile à l'invention. Parmi les matériaux à base de cellulose, on peut citer tous les types de celluloses modifiées, de papier ou encore de carton. Préférentiellement, le matériau à base de cellulose est choisi parmi la cellulose modifiée ou non, le papier ou le carton. La couche à base de polymère organique peut être sous forme d'un film, d'un tissé ou d'un non-tissé.

La couche à base de métal peut être du métal, un alliage de métal ou un constituant non métallique mélangé avec un métal. Comme exemple de métal pouvant être utilisé dans la structure multicouche, on peut citer l'aluminium.

Ces articles peuvent être fabriqués par un procédé comprenant une étape de co-extrusion dans le cas où les matériaux des différentes couches sont mis en contact à l'état fondu. A titre d'exemple, on peut citer les techniques de co-extrusion de tube, co-extrusion de profilé, de co-extrusion soufflage (en anglais « blow molding ») de bouteille, de flacon ou de réservoir, généralement regroupés sous le terme de co-extrusion soufflage de corps creux, co-extrusion gonflage appelée également soufflage de gaine (en anglais « film blowing ») et co-extrusion à plat (« en anglais « cast coextrusion »).

Ils peuvent également être fabriqués selon un procédé comprenant une étape d'application d'une couche de polymère à l'état fondu sur une couche à base de polymère organique, de métal ou de composition adhésive à l'état solide. Cette étape peut être réalisée par pressage, par surmoulage, stratification ou laminage (en anglais « lamination »), extrusion-laminage, couchage (en anglais « coating »), extrusion-couchage ou enduction.

Les conditions de transformation de la composition selon l'invention pour former des articles monocouches ou multicouches dépendent des techniques de mise en oeuvre employées. L'article selon l'invention peut notamment être réalisé par un procédé comprenant une étape de mélange thermomécanique à une température comprise entre 100 et 250°C, préférentiellement entre 130 et 210°C, suivie d'une étape de mise en forme. L'homme du métier saura trouver les conditions permettant la mise en oeuvre d'articles selon l'invention.

Un autre objet de l'invention porte sur un film comprenant la composition selon l'invention. En effet, les films obtenus présentent des propriétés excellentes, supérieures à celles des films déjà connus à base d'amidon thermoplastique et de polyoléfine.

Ces films peuvent présenter une épaisseur allant de 5 à 500 $\mu$m.

La composition peut être utilisée pour la fabrication de films monocouches ou multicouches.

En effet, un avantage de cette composition est qu'elle se transforme très aisément en film monocouche ou en film multicouche, notamment par extrusion gonflage ou extrusion à plat. Ce n'est pas toujours le cas des compositions à base d'amidon thermoplastique et de polyoléfine : dans ce cas, il est alors nécessaire de diminuer la cadence de production afin de pouvoir obtenir un film de bonne qualité. Un avantage de la composition selon l'invention est donc qu'elle peut être utilisée pour la fabrication de films monocouches et multicouches tout en conservant des cadences de production tout à fait satisfaisantes.

Des modes de réalisation de l'invention vont maintenant être décrits en détail dans les exemples non limitatifs qui suivent.

### Exemples

Méthodes analytiques

Les propriétés des différentes compositions détaillées ci-après ont été déterminées suivant les méthodes analytiques décrites ci-dessous.

Mesure des taux d'insolubles et taux de gonflement :

On détermine le taux d'insolubles dans l'eau selon le protocole suivant :

(i) Sécher l'échantillon de composition à caractériser (12 heures à 80°C sous vide)
(ii) Mesurer la masse de l'échantillon (= Ms1) avec une balance de précision.
(iii) Immerger l'échantillon dans l'eau, à 20°C (volume d'eau en ml égal à 100 fois la masse en g d'échantillon).
(iv) Prélever l'échantillon après un temps défini de plusieurs heures.
(v) Eliminer l'excès d'eau en surface avec un papier absorbant, le plus rapidement possible.
(vi) Poser l'échantillon sur une balance de précision et suivre la perte de masse pendant 2 minutes (mesure de la masse toute les 20 secondes)

(vii) Déterminer la masse de l'échantillon gonflé par représentation graphique des prises de mesure précédentes en fonction du temps et extrapolation à t=0 de la masse (= Mg).

(viii) Sécher l'échantillon (pendant 24 heures à 80°C sous vide). Mesurer la masse de l'échantillon sec (= Ms2)

(ix) Calculer le taux d'insolubles $T^i$, exprimé en pour-cents, suivant la formule Ms2/Ms1.

(x) Calculer le taux de gonflement $T^g$, en pour-cents, selon la formule (Mg-Ms1)/Ms1.

Mesure des propriétés mécaniques :

*Conditionnement de éprouvettes*

Pour la réalisation des essais de caractérisation des propriétés mécaniques, les éprouvettes utilisées sont conditionnées 24 heures à 20°C ± 2°C et 65% ± 5 % d'humidité relative suivant la norme NF T51-014.

*Test de traction*

On détermine les caractéristiques mécaniques en traction d'une composition et ce, selon la norme NF T51-034 (Détermination des propriétés en traction) en utilisant un banc d'essai Lloyd Instrument LR5K, une vitesse de traction : 50 mm/min et des éprouvettes normalisées de type H2.

A partir des courbes de traction (contrainte = f(allongement), obtenues à une vitesse d'étirement de 50 mm/min, on relève, pour la composition testée, l'allongement et la contrainte au seuil, l'allongement et la contrainte à la rupture.

*Test de flexion*

La mesure du module de flexion est réalisée selon la norme ISO 178, en utilisant un banc d'essai Lloyd Instrument LR5K, une vitesse de déformation : 2 mm/min et des éprouvettes normalisées de flexion (NF T58-001).

Mesure de l'Indice de fluidité volumique à l'état fondu (MVR) des compositions :

On détermine l'indice de fluidité en volume à 190°C sous une masse de 10kg des différents échantillons en utilisant un gradeur Kayeness 4001 Dynasco.

Mesure de la densité :

On détermine la densité des différents échantillons par pesée dans l'air (masse dans l'air) et dans l'eau (masse dans l'eau) d'un éprouvette normalisée de type H2.

La densité est calculée directement à partir de la formule

$$ d = \frac{\text{Masse dans l'air}}{(\text{Masse dans l'air} - \text{Masse dans l'eau})} $$

Mesure de la dureté :

On détermine la dureté Shore D suivant la norme NF T46-052 à l'aide d'un duromètre Shore D de poche.

Fabrication de compositions selon l'invention et comparatives

Constituants

Les constituants des différentes compositions exemplifiées sont présentées ci-dessous.

Il est précisé que les indices de fluidité (MFI) des différentes polyoléfines et polyoléfines fonctionnelles sont déterminés à 190°C sous 2,16 kg.

*- Polyoléfine*

PO1 = LDPE Riblène® MP30R (MFI = 7,5 g/10min)
PO2 = LLDPE Clearflex® MQBO (MFI = 7,5 g/10min)

*- Polyoléfine fonctionnelle*

La polyoléfine fonctionnelle est réalisé sur une extrudeuse de marque TSA, Diamètre 32, Longueur L/D = 50, pour un débit de : 25 kg/h. Le profil de température de l'extrudeuse (dix zones de chauffe Z1 à Z10, température en °C) est le suivant : 140/140/140/140/140/220/220/240/200/200 pour une vitesse de vis : 300 tr/min. Un copolymère de propylène est introduit dans la trémie principale en présence de 500 ppm de peroxyde organique et l'anhydride maléique est introduit en zone 4 de l'extrudeuse.

PF1 = copolymère de propylène et d'éthylène contenant en masse 90,5% de propylène, 8,4 % d'éthylène greffé avec 1,1% d'anhydride maléique (MFI = 20 g/10min).
PF2 = copolymère de propylène et d'éthylène contenant en masse 84,1% de propylène, 14,8 % d'éthylène greffé avec 1,1% d'anhydride maléique (MFI = 20 g/10min).
PF3 = mélange de 50 % en masse d'un copolymère de propylène et d'éthylène contenant en masse 91,5% de propylène, 8,5 % d'éthylène et de 50 % en masse d'un LDPE, ledit mélange étant greffé avec 1,1% d'anhydride maléique.

CPF1 = LDPE greffé à 1% d'anhydride maléique (MFI = 1 g/10min)
CPF2 = LDPE greffé à 1% d'anhydride maléique (MFI = 20 g/10min)
CPF3 = PP homopolymère greffé à 1% d'anhydride maléique (MFI = 20 g/10min)
CPF4 = PP homopolymère greffé à 1% d'anhydride maléique (MFI = 100 g/10min)

*- Amidon*

A1 = Amidon de Blé (contenant 12,5% d'eau)
A2 = Fécule de pomme de terre (contenant 19% d'eau)

*- Plastifiant*

PL1 = Mélange de plastifiants constitué en masse de sorbitol (34,5%), de glycérol (51,7%) et d'eau (13,8%)
PL2 = Mélange de plastifiants constitué de sorbitol (70%) et d'eau (30%)
PL3 = Mélange de plastifiants constitué de Sorbitol (66%), 3% de maltitol, 1% de mannitol et d'eau (30%)

*- Additifs*

P.A = Aide au procédé
A.O.P = Antioxydant primaire
A.L= Agent de liaison diisocyanate

Procédé de fabrication de la composition

Les exemples de cette invention ont été réalisés sur une extrudeuse de marque TSA, Diamètre 32, Longueur L/D = 80, pour un débit de : 50 kg/h - Profil de température (seize zones de chauffe Z1 à Z16, température en °C) : 40/40/40/40/70/90/110/130/150/170/200/220/220/200/180/180pour Vitesse de vis : 400 tr/min.
On réalise un pré-mélange en sac de la polyoléfine et de la polyoléfine fonctionnelle pour former un mélange polymérique Dans le cadre de ce procédé, on introduit dans l'extrudeuse:

- le mélange polymérique (Polyoléfine + Polyoléfine fonctionnelle) dans la trémie principale de l'extrudeuse, en suite de quoi ledit mélange traverse l'ensemble des zones de chauffe de l'extrudeuse,
- le plastifiant de l'amidon au niveau de la zone Z6 (26-27D),

- l'amidon au niveau de la zone Z7 (32-33 D) et
- l'agent de liaison au niveau de la zone Z14 (66-67D)

Le dégazage est réalisé par l'application d'un vide partiel en Z 12 (vide de 100 mbar) permettant d'éliminer les composés volatils comme l'eau.

Détail des compositions

Les compositions selon l'invention (exemples 5 et suivants) et comparatives (exemples 1 à 4) ont été réalisées en utilisant le procédé décrit ci-dessus. Les quantités des différents constituants des compositions figurent dans le Tableau 1.

Tableau 1 : Compositions selon l'invention et comparatives

| Composition | Composant | Polyoléfine | Polyoléfine Fonctionnelle | Amidon | Plastifiant | Additifs | | |
|---|---|---|---|---|---|---|---|---|
| Exemple 1 | Nature | **PO1** | **CPF1** | **A1** | **PL1** | **P.A** | **A.O.P** | **A.L** |
| | % introduit | 21,76 | 21,76 | 32,43 | 21,62 | 1,17 | 0,36 | 0,9 |
| Exemple 2 | Nature | **PO1** | **CPF2** | **A1** | **PL1** | **P.A** | **A.O.P** | **A.L** |
| | % introduit | 21,76 | 21,76 | 32,43 | 21,62 | 1,17 | 0,36 | 0,9 |
| Exemple 3 | Nature | **PO1** | CPF3 | **A1** | **PL1** | **P.A** | **A.O.P** | **A.L** |
| | % introduit | 21,76 | 21,76 | 32,43 | 21,62 | 1,17 | 0,36 | 0,9 |
| Exemple 4 | Nature | **PO1** | CPF4 | **A1** | **PL1** | **P.A** | **A.O.P** | **A.L** |
| | % introduit | 21,76 | 21,76 | 32,43 | 21,62 | 1,17 | 0,36 | 0,9 |
| Exemple 5 | Nature | **PO1** | **PF1** | **A1** | **PL1** | **P.A** | **A.O.P** | **A.L** |
| | % introduit | 21,76 | 21,76 | 32,43 | 21,62 | 1,17 | 0,36 | 0,9 |
| Exemple 6 | Nature | **PO1** | **PF1** | **A1** | **PL1** | **P.A** | **A.O.P** | **A.L** |
| | % introduit | 21,81 | 21,81 | 37,76 | 16,19 | 1,17 | 0,36 | 0,9 |
| Exemple 7 | Nature | **PO1** | **PF1** | **A1** | **PL2** | **P.A** | **A.O.P** | **A.L** |
| | % introduit | 20,98 | 20,98 | 33,41 | 22,28 | 1,17 | 0,36 | 0,9 |
| Exemple 8 | Nature | **PO1** | **PF2** | **A1** | **PL2** | **P.A** | **A.O.P** | **A.L** |
| | % introduit | 20,98 | 20,98 | 33,41 | 22,28 | 1,17 | 0,36 | 0,9 |
| Exemple 9 | Nature | **PO1** | **PF1** | **A1** | **PL3** | **P.A** | **A.O.P** | **A.L** |
| | % introduit | 20,98 | 20,98 | 33,41 | 22,28 | 1,17 | 0,36 | 0,9 |
| Exemple 10 | Nature | **PO1** | **PF2** | **A1** | **PL3** | **P.A** | **A.O.P** | **A.L** |
| | % introduit | 20,98 | 20,98 | 33,41 | 22,28 | 1,13 | 0,35 | 0,87 |
| Exemple 11 | Nature | **PO2** | **PF1** | **A1** | **PL1** | **P.A** | **A.O.P** | **A.L** |
| | % introduit | 21,76 | 21,76 | 32,43 | 21,62 | 1,17 | 0,36 | 0,9 |
| Exemple 12 | Nature | **PO2** | **PF1** | **A1** | **PL3** | **P.A** | **A.O.P** | **A.L** |
| | % introduit | 20,98 | 20,98 | 33,41 | 22,28 | 1,13 | 0,35 | 0,87 |
| Exemple 13 | Nature | **PO2** | **PF2** | **A1** | **PL3** | **P.A** | **A.O.P** | **A.L** |
| | % introduit | 20,98 | 20,98 | 33,41 | 22,28 | 1,13 | 0,35 | 0,87 |
| Exemple 14 | Nature | **PO2** | **PF2** | **A1** | **PL3** | **P.A** | **A.O.P** | **A.L** |
| | % introduit | 21,11 | 21,11 | 36,03 | 19,4 | 1,13 | 0,35 | 0,87 |
| Exemple 15 | Nature | **PO2** | **PF2** | **A2** | **PL3** | **P.A** | **A.O.P** | **A.L** |
| | % introduit | 20,39 | 20,39 | 34,15 | 22,76 | 1,13 | 0,35 | 0,87 |

(suite)

| Composition | Composant | Polyoléfine | Polyoléfine Fonctionnelle | Amidon | Plastifiant | Additifs | | |
|---|---|---|---|---|---|---|---|---|
| Exemple | Nature | PO2 | PF3 | A1 | PL2 | **P.A** | **A.O.P** | **A.L** |
| 16 | % introduit | 20,21 | 20,21 | 34.34 | 22.89 | 1,13 | 0,35 | 0,87 |

Les compositions des exemples 1 à 16 présentent une densité d'environ 1,13.

**Caractérisation des compositions**

**Caractérisation mécanique d'éprouvettes injectées**

En vue d'évaluer leurs propriétés mécaniques, les compositions sont mises en oeuvre sous forme d'éprouvettes à l'aide d'une presse injectée, ces propriétés étant reportées dans les Tableaux 2 et 4.

Les autres propriétés des compositions sont reportées dans les Tableaux 3 et 5.

30

Les exemples 1 à 4 avec l'exemple 5 démontrent les bénéfices de la composition selon l'invention : différentes compositions, qui diffèrent uniquement par le choix de la polyoléfine fonctionnelle utilisée, sont ainsi comparées.

Les propriétés des compositions de ces exemples sont regroupées dans le Tableau 2 et 3.

Tableau 2 : Effet de la polyoléfine fonctionnelle utile à l'invention : Propriétés mécaniques des compositions

| Composition | $\sigma_{seuil}$ (MPa) | $\varepsilon_{seuil}$ (%) | $\sigma_{rupt.}$ (MPa) | $\varepsilon_{rupt.}$ (%) | Module de flexion (MPa) | Dureté Shore D |
|---|---|---|---|---|---|---|
| Exemple 1 | 6 | 18,5 | 9 | 19 | 184 | 48 |
| Exemple 2 | 11,8 | 27,5 | 15,5 | 162 | 305 | 55 |
| Exemple 3 | 11,9 | 26,6 | 16,2 | 150 | 520 | 58 |
| Exemple 4 | 11 | 25,4 | 13 | 440 | 500 | 57 |
| Exemple 5 | 7,9 | 32,5 | 14.2 | 862 | 256 | 48 |

Tableau 3 : Effet de la polyoléfine fonctionnelle utile à l'invention : Autres propriétés

| Composition | MVR (190°C/10kg) cm$^3$/10min | Filmabilité | Aspect | Immersion eau 72h | |
|---|---|---|---|---|---|
| | | | | $T^g$ (%) | $T^i$(%) |
| Exemple 1 | 0,1 | impossible | - | 12,8 | 80,3 |
| Exemple 2 | 9 | bonne | - | 5,2 | 99,1 |
| Exemple 3 | 10 | bonne | - | 4,6 | 99,4 |
| Exemple 4 | 116 | impossible | - | 3,5 | 99,3 |
| Exemple 5 | 16 | bonne | + | 3,1 | 99,9 |
| Aspect « - » : film hétérogène, présence de « gels » Aspect « + » : film homogène, absence de « gels » | | | | | |

Les compositions comparatives des exemples 1 à 4, dans lesquelles la polyoléfine fonctionnelle utilisée est un polyéthylène basse densité greffé par de anhydride maléique ou un polypropylène homopolymère greffé par de l'anhydride maléique, montrent que :

- l'utilisation d'un polyéthylène basse densité greffé par de l'anhydride maléique de MFI égal à 1 g/10 min conduit à un allongement à la rupture très faible (exemple 1). La tenue à l'eau de la composition est également très faible. Les essais d'extrusion gonflage ont également révélé que la composition est trop visqueuse (MVR d'environ 0,1 cm$^3$/10 min, n'a pas d'étirabilité à l'état fondu (résistance à l'état fondu, en anglais « *melt strength* » trop importante) et n'est donc pas filmable,

- Un polyéthylène basse densité greffé par de l'anhydride maléique de MFI égal à 20 g/10 min conduit à un allongement à la rupture plus important mais qui demeure néanmoins faible (exemple 2). La matière est plus fluide et les essais d'extrusion gonflage ont révélé que la composition présentait une étirabilité à l'état fondu suffisante pour être filmable. Cependant, le film obtenu présente une forte hétérogénéité avec notamment une présence importante de gels. La tenue mécanique du film est également très faible (pas de résistance à la déchirure ni à la perforation),

- Un polypropylène homopolymère greffé par de l'anhydride maléique de MFI égal à 20 g/10 min conduit également à un allongement à la rupture plus important mais qui demeure néanmoins faible (exemple 3). La matière présente une viscosité proche de l'exemple 2 et peut être filmée par extrusion gonflage. En effet, elle présente une étirabilité à l'état fondu suffisante. Cependant, le film obtenu présente aussi une forte hétérogénéité (présence importante de gels) et la tenue mécanique est très faible (pas de résistance à la déchirure ni à la perforation),

- Un polypropylène greffé par de l'anhydride maléique de MFI égal à 100 g/10 min conduit à un allongement à la rupture plus important (exemple 4). Cependant, la matière présente une viscosité trop faible et ne peut être filmée par extrusion gonflage en raison d'une résistance à l'état fondu (« *melt strength* ») insuffisante.

Les résultats obtenus pour la composition de l'exemple 5 selon l'invention, dans laquelle la polyoléfine fonctionnelle utilisée est un copolymère de propylène et d'éthylène greffé par de anhydride maléique de MFI égal à 20 g/10mn, comprenant 90,5% de propylène, montrent que l'utilisation d'une telle polyoléfine fonctionnelle permet d'obtenir un allongement à la rupture très important, bien supérieur à celui des compositions comparatives. La viscosité de la matière est proche de celles des compositions des exemples 2 et 3. Elle présente une très bonne étirabilité à l'état fondu qui lui permet d'être filmable par extrusion gonflage. Le film obtenu est très homogène, sans gel et présente une très bonne tenue mécanique (très bonne résistance à la déchirure et à la perforation).

Les exemples 6 à 16 selon l'invention, dont les propriétés sont regroupées dans les Tableaux 4 et 5, illustrent quant à eux différentes variantes avantageuses de l'invention.

Tableau 4 : Propriétés mécaniques de différentes compositions selon l'invention

| Composition | $\sigma_{seuil}$ (MPa) | $\varepsilon_{seuil}$ (%) | $\sigma_{rupt.}$ (M Pa) | $\varepsilon_{rupt.}$ (%) | Module de flexion (MPa) | Dureté Shore D |
|---|---|---|---|---|---|---|
| Exemple 5 | 7.9 | 32.5 | 14.2 | 862 | 256 | 48 |
| Exemple 6 | 8,2 | 24 | 14 | 446 | 212 | 51 |
| Exemple 7 | 10 | 22 | 17 | 196 | 325 | 55 |
| Exemple 8 | 6 | 22 | 12 | 166 | 110 | 50 |
| Exemple 9 | 11 | 19 | 16 | 152 | 320 | 47 |
| Exemple 10 | 5 | 17 | 13 | 166 | 100 | 46 |
| Exemple 11 | 8,0 | 27,6 | 14,2 | 882 | 220 | 45 |
| Exemple 12 | 8,6 | 22,3 | 16,0 | 355 | 333 | 50 |
| Exemple 13 | 3,.9 | 28,3 | 9,7 | 414 | 89 | 36 |
| Exemple 14 | 4,8 | 29,3 | 10,8 | 391 | 90 | 38 |
| Exemple 15 | 5 | 31 | 12 | 422 | 71 | 40 |

Tableau 5 : Autres propriétés

| Composition | MVR (190°C/10kg) cm³/10min | Filmabilité | Aspect | Immersion eau 72h | |
|---|---|---|---|---|---|
| | | | | $T^g$ (%) | $T^i$(%) |
| Exemple 5 | 16 | bonne | + | 3,1 | 99,9 |
| Exemple 6 | 24 | bonne | + | 4,1 | 100 |
| Exemple 7 | 11 | bonne | + | 2 | 98,9 |
| Exemple 8 | 3 | bonne | + | 2,4 | 99 |
| Exemple 9 | 10 | bonne | + | 2 | 98,9 |
| Exemple 10 | 3 | bonne | + | 2,4 | 99 |

(suite)

| Composition | MVR (190°C/10kg) cm$^3$/10min | Filmabilité | Aspect | Immersion eau 72h | |
|---|---|---|---|---|---|
| | | | | T$^g$ (%) | T$^i$(%) |
| Exemple 11 | 22 | bonne | + | 3,7 | 99,8 |
| Exemple 12 | 10 | bonne | + | 2,7 | 99,9 |
| Exemple 13 | 4 | bonne | + | 3 | 100 |
| Exemple 14 | 3 | bonne | + | 3,1 | 100 |
| Exemple 15 | 12 | bonne | + | 2.7 | 99.5 |
| Exemple 16 | 9,5 | très bonne | + | 2,7 | 99,9 |

L'exemple 6 montre que l'utilisation d'une polyoléfine fonctionnelle utile à l'invention permet de réduire le taux de plastifiant tout en conservant un allongement à la rupture important (exemple 6 vs exemple 5 pour lequel l'amidon contient 30 parts de plastifiant pour 70 parts au lieu de 40 pour 60 parts). Malgré cette réduction en plastifiant, la matière conserve une bonne étirabilité à l'état fondu, qui lui permet d'être filmable par extrusion gonflage. Le film obtenu est très homogène, sans gel et présente également une très bonne tenue mécanique (très bonne résistance à la déchirure et à la perforation).

Les résultats obtenus pour les compositions des exemples 7 et 9, dans lesquelles la polyoléfine et la polyoléfine fonctionnelle utilisées sont identiques à celles des exemples 5 et 6, montrent que l'on peut obtenir des compositions comprenant du sorbitol comme plastifiant présentant d'excellentes propriétés. L'allongement à la rupture a certes légèrement diminué mais cette diminution reste limitée. Une augmentation du module de flexion est également observée. Ces compositions présentent une tenue à l'eau fortement améliorée, comme le montrent les taux d'insolubles et les taux de gonflement.

On observe des résultats similaires pour les compositions des exemples 8 et 10, dans lesquelles la polyoléfine fonctionnelle utilisée est un copolymère de propylène et d'éthylène greffé par de l'anhydride maléique et comprenant 84,1% de propylène. Ces exemples montrent que l'on peut obtenir des compositions plus flexibles, comme le montrent les modules de flexion plus faibles que ceux des compositions des exemples 7 et 9.

Les viscosités des compositions des exemples 7 à 10 sont proches de celles des exemples 2 et 3. Elles présentent une très bonne étirabilité à l'état fondu qui leur permet d'être filmable par extrusion gonflage. Les films obtenus sont très homogènes, sans gel. Elles présentent une tenue mécanique moyenne moins élevée que celles des compositions des exemples 5 et 6 (notamment en termes de résistance à la déchirure et à la performation), mais supérieure cependant à celle des compositions comparatives 1 à 4.

Les résultats obtenus pour les compositions des exemples 11 et 12, dans lesquelles la polyoléfine utilisée est un polyéthylène basse densité linéaire et la polyoléfine fonctionnelle utilisée est un copolymère de propylène et d'éthylène greffé par de l'anhydride maléique et comprenant 90,5% de propylène, montrent que :

- L'utilisation d'une telle polyoléfine permet d'obtenir un allongement à la rupture très important (exemple 11). La viscosité de la matière est proche de celles des exemples 2 et 3. Elle présente une très bonne étirabilité à l'état fondu qui lui permet d'être filmable par extrusion gonflage. Le film obtenu est très homogène, sans gel et présente une très bonne tenue mécanique (très bonne résistance à la déchirure et à la perforation),

- L'utilisation d'une telle polyoléfine permet également d'obtenir des compositions utilisant du sorbitol comme plastifiant présentant de bonnes propriétés (voir exemple 12). L'allongement à la rupture a certes diminué mais reste important. La viscosité et l'étirabilité de la matière à l'état fondu lui permettent d'être filmable par extrusion gonflage. Le film obtenu est très homogène, sans gel et présente une très bonne tenue mécanique (très bonne résistance à la déchirure et à la perforation).

L'utilisation d'un plastifiant sans glycérol entraîne également une augmentation du module de flexion. Toutefois, les résultats obtenus pour les compositions des exemples 13 à 15 dans lesquelles la polyoléfine fonctionnelle utilisée est cette fois un copolymère de propylène et d'éthylène greffé par de l'anhydride maléique, comprenant 84,1% de propylène, montrent que l'on peut obtenir des compositions plus flexibles, comme le montrent les modules de flexion plus faibles que ceux de la composition de l'exemple 12.

Ces essais montrent également qu'il est possible de diminuer le taux de plastifiant sans perte d'allongement à la rupture ni d'augmentation de module de flexion (exemple 14). L'exemple 15 montre également qu'on peut également obtenir une composition utilisant comme amidon de la fécule de pomme de terre, cette composition présentant en outre une coloration et une odeur encore plus faibles que les compositions réalisées à partir d'amidon de blé.

La viscosité et la très bonne étirabilité à l'état fondu des compositions selon les exemples 13 à 15 leur permettent d'être filmables par extrusion gonflage. Les films obtenus sont très homogènes, sans gel. Ils présentent une bonne tenue mécanique (résistance à la déchirure et à la performation).

L'exemple 16 montre qu'il est possible d'améliorer encore la filmabilité en utilisant un mélange greffé de polyoléfines. Ainsi, les exemples 1 à 15 montrent donc bien l'intérêt d'utiliser la polyoléfine fonctionnelle utile à l'invention plutôt que les polyoléfines fonctionnelles déjà utilisées dans l'art antérieur, notamment les polyéthylènes ou les polypropylènes greffés anhydride maléique utilisés dans les compositions 1 à 4.

Les compositions 5 et 16 ont également été caractérisées mécaniquement sur films d'épaisseur 50 $\mu$m produits par extrusion gonflage. Les résultats reportés dans le Tableau 6 ci-dessous montrent les excellentes propriétés des films obtenus.

| Composition | $\sigma_{rupt}$ (MPa) Sens machine | $\varepsilon_{rupt}$ (%) Sens machine | Module de traction (MPa) Sens machine | $\sigma_{rupt}$ (MPa) Sens tranverse | $\varepsilon_{rupt}$ (%) Sens transverse | Module de traction (MPa) Sens transverse |
|---|---|---|---|---|---|---|
| Exemple 5 | 12 | 770 | 75 | 11 | 860 | 29 |
| Exemple 16 | 10 | 490 | 190 | 9 | 180 | 230 |

**Revendications**

1.  Composition thermoplastique comprenant :

    • au moins un amidon ;
    • au moins un plastifiant de l'amidon ;
    • au moins un polyéthylène ayant une densité comprise entre 0,910 et 0,935 ;
    • au moins une polyoléfine fonctionnelle ;

    **caractérisée en ce que** la polyoléfine fonctionnelle est un copolymère de propylène et d'au moins une seconde alpha-oléfine, et comprenant en outre au moins un composé fonctionnel porteur d'au moins une fonction polaire, ledit copolymère comprenant par rapport à sa masse totale, de 45 à 95% en masse de motifs issus du propylène.

2.  Composition selon la revendication précédente, **caractérisée en ce que** la polyoléfine fonctionnelle comprend par rapport à sa masse totale :

    • de 45 à 95% de propylène ;
    • de 4 à 40% d'alpha-oléfine différente du propylène ;
    • plus de 0% et moins de 20% de composé fonctionnel ;

    la somme de propylène, d'alpha-oléfine et de composé fonctionnel faisant 100%.

3.  Composition selon la revendication précédente, **caractérisée en ce que** la polyoléfine fonctionnelle comprend par rapport à sa masse totale :

    • de 70 à 94% de propylène ;
    • de 5 à 25% d'alpha-oléfine différente du propylène ;
    • de 0,1% à 5% de composé fonctionnel ;

    la somme de propylène, d'alpha-oléfine et de composé fonctionnel faisant 100%.

4.  Composition selon l'une des revendications précédentes, **caractérisée en ce que** la polyoléfine fonctionnelle comprend, par rapport à sa masse totale, de 0,1 à 5% en masse de composé fonctionnel, avantageusement de 0,5 à 2% en masse.

5.  Composition selon l'une des revendications précédentes, **caractérisée en ce que** la seconde alpha-oléfine de la polyoléfine fonctionnelle est choisie parmi l'éthylène et le 1-butène.

6. Composition selon l'une des revendications précédentes, dans laquelle la polyoléfine fonctionnelle comprend de 70 à 94% en masse de propylène.

7. Composition selon l'une des revendications précédentes, **caractérisée en ce que** le composé fonctionnel porteur d'une fonction polaire présente un moment dipolaire supérieur à 1 Debye.

8. Composition selon l'une des revendications précédentes, **caractérisée en ce que** la polyoléfine fonctionnelle est un copolymère de propylène et d'alpha-oléfine qui est greffé par le composé fonctionnel porteur de la fonction polaire, ledit composé fonctionnel étant choisi parmi les anhydrides d'acide carboxylique insaturés, les acides carboxyliques insaturés, les oxiranes insaturés et les silanes insaturés, préférentiellement l'anhydride maléique.

9. Composition selon la revendication précédente, dans laquelle le copolymère de propylène et d'alpha-oléfine est un copolymère à blocs ou un copolymère statistique.

10. Composition selon l'une des revendications précédentes, **caractérisée en ce que** le polyéthylène est choisi parmi le polyéthylène très basse densité, le polyéthylène basse densité, le polyéthylène basse densité linéaire ou un mélange de ces polymères.

11. Composition selon l'une des revendications précédentes, **caractérisée en ce qu'**elle comprend, par rapport à sa masse totale, de 5 à 90% de polyoléfine fonctionnelle, de préférence de 10 à 30%.

12. Composition selon l'une des revendications précédentes, **caractérisée en ce qu'**elle comprend, par rapport à sa masse totale :

   • de 5 à 40% d'amidon, avantageusement de 8 à 30% ;
   • de 5 à 40% de plastifiant, avantageusement de 8 à 30% ;
   • de 5 à 90% de polyoléfine fonctionnelle, avantageusement de 10 à 30% ;
   • entre 5 et 85% de polyéthylène, par exemple entre 5 et 80%, avantageusement de 20 à 60% ;
   • éventuellement entre 0 et 20% d'un constituant optionnel autre que l'amidon, le plastifiant de l'amidon, la polyoléfine fonctionnelle et le polyéthylène, par exemple d'un additif ;

   la somme des constituants faisant 100%.

13. Film comprenant une composition selon l'une des revendications précédentes.

14. Utilisation de la composition selon l'une des revendications 1 à 12, pour la fabrication de films monocouches ou multicouches.

15. Procédé de fabrication de la composition selon l'une des revendications 1 à 12, comprenant au moins une étape de mélange à l'état fondu ou ramolli des différents constituants et une étape de récupération de la composition.


**Patentansprüche**

1. Thermoplastische Zusammensetzung, umfassend:

   • mindestens eine Stärke;
   • mindestens ein Stärke-Plastifizierungsmittel;
   • mindestens ein Polyethylen mit einer Dichte, umfassend zwischen 0,910 und 0,935;
   • mindestens ein funktionelles Polyolefin;

   **dadurch gekennzeichnet, dass** das funktionelle Polyolefin ein Copolymer von Propylen und mindestens einem zweiten alpha-Olefin ist, und weiterhin umfassend mindestens eine funktionelle Zusammensetzung, die mindestens eine polare Funktion aufweist, wobei das Copolymer bezüglich seiner Gesamtmasse von 45 bis 95 Masse-% Struktureinheiten von Propylen umfasst.

2. Zusammensetzung nach dem vorhergehenden Anspruch, **dadurch gekennzeichnet, dass** das funktionelle Polyolefin bezüglich seiner Gesamtmasse umfasst:

• von 45 bis 95% Propylen;
• von 4 bis 40% alpha-Olefin, das verschieden von Propylen ist;
• mehr als 0% und weniger als 20% funktionelle Zusammensetzung;

wobei die Summe aus Propylen, alpha-Olefin und funktioneller Zusammensetzung 100% entspricht.

**3.** Zusammensetzung nach dem vorhergehenden Anspruch, **dadurch gekennzeichnet, dass** das funktionelle Polyolefin bezüglich seiner Gesamtmasse umfasst:

• von 70 bis 94% Propylen;
• von 5 bis 25% alpha-Olefin, das verschieden von Propylen ist;
• von 0,1 % bis 5% funktionelle Zusammensetzung;

wobei die Summe aus Propylen, alpha-Olefin und funktioneller Zusammensetzung 100% entspricht.

**4.** Zusammensetzung nach einem der vorhergehenden Ansprüche, **dadurch gekennzeichnet, dass** das funktionelle Polyolefin bezüglich seiner Gesamtmasse von 0,1 bis 5% bezüglich der Masse funktionelle Zusammensetzung umfasst, bevorzugt von 0,5 bis 2% bezüglich der Masse.

**5.** Zusammensetzung nach einem der vorhergehenden Ansprüche, **dadurch gekennzeichnet, dass** das zweite alpha-Olefin des funktionellen Polyolefins ausgewählt ist aus Ethylen und 1-Buten.

**6.** Zusammensetzung nach einem der vorhergehenden Ansprüche, worin das funktionelle Polyolefin 70 bis 94 Masse-% Propylen enthält.

**7.** Zusammensetzung nach einem der vorhergehenden Ansprüche, **dadurch gekennzeichnet, dass** die funktionelle Zusammensetzung Träger einer polaren Funktion ist, die ein Dipolmoment über 1 Debeye aufweist.

**8.** Zusammensetzung nach einem der vorhergehenden Ansprüche, **dadurch gekennzeichnet, dass** das funktionelle Polyolefin ein Copolymer von Propylen und alpha-Olefin ist, das gepfropft ist mit einer funktionellen Zusammensetzung, die die polare Funktion trägt, wobei die funktionelle Zusammensetzung ausgewählt ist aus ungesättigten Carbonsäureanhydriden, ungesättigten Carbonsäuren, ungesättigten Oxiranen und ungesättigten Silanen, vorzugsweise Maleinsäureanhydrid.

**9.** Zusammensetzung nach dem vorhergehenden Anspruch, worin das Copolymer aus Propylen und alpha-Olefin ein Blockcopolymer oder ein statistisches Copolymer ist.

**10.** Zusammensetzung nach einem der vorhergehenden Ansprüche, **dadurch gekennzeichnet, dass** das Polyethylen ausgewählt ist aus Polyethylen mit sehr geringer Dichte, Polyethylen mit geringer Dichte, linearem Polyethylen mit geringer Dichte oder einem Gemisch dieser Polymere.

**11.** Zusammensetzung nach einem der vorhergehenden Ansprüche, **dadurch gekennzeichnet, dass** sie bezüglich ihrer Gesamtmasse 5 bis 90% funktionelles Polyolefin, vorzugsweise 10 bis 30%, umfasst.

**12.** Zusammensetzung nach einem der vorhergehenden Ansprüche, **dadurch gekennzeichnet, dass** sie bezüglich ihrer Gesamtmasse umfasst:

• 5 bis 40% Stärke, bevorzugt von 8 bis 30%;
• 5 bis 40% Plastifizierungsmittel, vorzugsweise von 8 bis 30%;
• 5 bis 90% funktionelles Polyolefin, vorzugsweise von 10 bis 30%;
• zwischen 5 und 85% Polyethylen, beispielsweise zwischen 5 und 80%, bevorzugt von 20 bis 60%;
• gegebenenfalls zwischen 0 und 20% eines optionalen Bestandteils,

der von Stärke, dem Stärke-Plastifizierungsmittel, dem funktionellen Polyolefin und dem Polyethylen verschieden ist, zum Beispiel ein Additiv; wobei die Summe der Bestandteile 100% entspricht.

**13.** Film, umfassend eine Zusammensetzung nach einem der vorhergehenden Ansprüche.

**14.** Verwendung nach einem der Ansprüche 1 bis 12 zur Herstellung von ein- oder mehrschichtigen Filmen.

**15.** Verfahren zur Herstellung der Zusammensetzung nach einem der Ansprüche 1 bis 12, umfassend mindestens einen Schritt des Mischens in geschmolzenem oder erweichtem Zustand verschiedener Bestandteile und einen Schritt der Gewinnung der Zusammensetzung.

**Claims**

**1.** Thermoplastic composition comprising:

- at least one starch;
- at least one starch plasticiser;
- at least one polyethylene having a density of between 0.910 and 0.935;
- at least one functional polyolefin;

**characterised in that** the functional polyolefin is a copolymer of propylene and at least a second alpha olefin, and comprising at least one functional compound carrying at least a polar function, said copolymer comprising, relative to its total weight, 45 to 95% of units derived from propylene.

**2.** Composition as claimed in the preceding claim, **characterised in that** relative to its total weight, the functional polyolefin comprises:

- 45 to 95% of propylene;
- 4 to 40% of alpha olefin different from the propylene;
- more than 0% and less than 20% of functional compound;

the sum of propylene, alpha olefin and functional compound being 100%.

**3.** Composition as claimed in the preceding claim, **characterised in that**, relative to its total weight, the functional polyolefin comprises:

- 70 to 94% of propylene;
- 5 to 25% of alpha olefin different from the propylene;
- 0.1 % to 5% of functional compound;

the sum of propylene, alpha olefin and functional compound being 100%.

**4.** Composition as claimed in one of the preceding claims, **characterised in that** the functional polyolefin comprises, relative to its total weight, 0.1 to 5% by weight of functional compound, advantageously 0.5 to 2% by weight.

**5.** Composition as claimed in one of the preceding claims, **characterised in that** the second alpha olefin of the functional polyolefin is selected from ethylene and 1-butene.

**6.** Composition as claimed in one of the preceding claims, in which the functional polyolefin comprises 70 to 94% by weight of propylene.

**7.** Composition as claimed in one of the preceding claims, **characterised in that** the functional compound carrying a polar function has a dipole moment greater than 1 Debye.

**8.** Composition as claimed in one of the preceding claims, **characterised in that** the functional polyolefin is a copolymer of propylene and alpha olefin which is grafted by the functional compound carrying the polar function, said functional compound being selected from unsaturated carboxylic acid anhydrides, unsaturated carboxylic acids, unsaturated oxiranes and unsaturated silanes, preferably maleic anhydride.

**9.** Composition as claimed in the preceding claim, in which the copolymer of propylene and alpha olefin is a block copolymer or a statistical copolymer.

10. Composition as claimed in one of the preceding claims, **characterised in that** the polyethylene is selected from very low density polyethylene, low density polyethylene, linear low density polyethylene or a mixture of these copolymers.

11. Composition as claimed in one of the preceding claims, **characterised in that** relative to its total weight, it comprises 5 to 90% of functional polyolefin, preferably 10 to 30%.

12. Composition as claimed in one of the preceding claims, **characterised in that**, relative to its total weight, it comprises:

   • 5 to 40% of starch, advantageously 8 to 30%;
   • 5 to 40% of plasticiser, advantageously 8 to 30%;
   • 5 to 90% of functional polyolefin, advantageously 10 to 30%;
   • between 5 and 85% of polyethylene, for example between 5 and 80%, advantageously 20 to 60%;
   • optionally between 0 and 20% of an optional constituent other than the starch, starch plasticiser, functional polyolefin and polyethylene, for example an additive;

   the sum of the constituents being 100%.

13. Film comprising a composition as claimed in one of the preceding claims.

14. Use of the composition as claimed in one of claims 1 to 12 for the manufacture of single-layer and multilayer films.

15. Method of producing the composition as claimed in one of claims 1 to 12, comprising at least one step of mixing the different constituents in the molten or softened state and a step of recovering the composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 554939 A
- US 5314934 A
- WO 2010012041 A
- WO 2009022195 A1
- US 20110305886 A1
- WO 2009095618 A
- WO 2010010282 A

**Littérature non-brevet citée dans la description**

- **BIKIARIS et al.** LDPE/Starch blends compatibilized with PE-gMA copolymers. *Journal of Applied Polymer Science,* 1998, vol. 70, 1503-1521